# EUROPEAN PATENT APPLICATION

(11) **EP 4 478 491 A1**
(43) Date of publication of application: **18.12.2024**
(21) Application number: 24179437.9
(22) Date of filing: 31.05.2024
(51) Int. Cl.: H01M 50/10, H01M 50/50, B23K 20/10, B23K 26/21

(54) **SQUARE BATTERY AND WELDING METHOD**

(30) Priority: 01.06.2023 CN 202310649791; 01.06.2023 CN 202321394457 U; 10.04.2024 WO PCT/CN2024/086980
(71) Applicant: Eve Power Co., Ltd., Jingmen, Hubei 448000 (CN)
(72) Inventor: FENG, Haishan, Jingmen, 448000 (CN); YUAN, Dingding, Jingmen, 448000 (CN); LAN, Xiao, Jingmen, 448000 (CN); SONG, Shuaishuai, Jingmen, 448000 (CN); CHEN, Liquan, Jingmen, 448000 (CN)
(74) Representative: Murgitroyd & Company

(57) **Abstract**

The present disclosure provides a square battery and a welding method. The square battery includes: a cover plate provided with a pole; and a core provided with a tab, where the tab is directly connected to the pole by laser welding, so that construction of an energy transmission path of the battery is realized, and a charging and discharging function of the core is realized. Additionally, since the tab of the core of the square battery is directly connected to the cover plate of the square battery, an auxiliary welding sheet and a connection sheet are removed, thereby improving the internal space utilization rate and the mass specific energy of the square battery.

## Description

### TECHNICAL FIELD

The present disclosure relates to the field of battery technologies, and more particular to a square battery and a welding method.

### BACKGROUND

In the related art, a connection method for a core and a cover plate in a square battery is mostly performed by performing connection between the core, an auxiliary welding sheet, a connection sheet and the cover plate, where the auxiliary welding sheet is used to protect a positive electrode tab and a negative electrode tab of the core, and the positive electrode tab and the negative electrode tab are welded to the cover plate via the connection sheet. The welding connection method may not only increase a weight of the battery itself, occupy an internal space of the battery, reduce mass specific energy of the battery, and reduce internal space utilization rate of the square battery. Moreover, due to the introduction of the auxiliary welding sheet and the connection sheet, the energy inside the core needs to be output to a charging and discharging port on the cover plate only through the auxiliary welding sheet and the connection sheet. In this process of the welding connection method, a portion of the energy is lost, which causes a temperature inside the battery to rise significantly and a risk of thermal runaway during long-term use of the battery.

### SUMMARY

The present disclosure provides a square battery and a welding method, which can improve the internal space utilization rate and the mass specific energy of the square battery.

In a first aspect, embodiments of the present disclosure provide a square battery, including: a cover plate provided with a pole; and a core provided with a tab connected directly to the pole by laser welding.

In a second aspect, embodiments of the present disclosure provide a welding method, including: performing ultrasonic pre-welding for a tab of a core according to a first solder printing area to form the ultrasonic pre-welded tab, where the first solder printing area is determined according to a size and a shape of the pole; and performing laser welding for the ultrasonic pre-welded tab and the pole according to a second solder printing area to connect the tab with the pole, where a ratio of the second solder printing area to the first solder printing area is less than 1.

Beneficial Effects of the present disclosure are that, in the embodiments of the present disclosure, the square battery includes the cover plate provided with the pole; and the core provided with the tab, where the tab is directly connected to the pole by laser welding, so that construction of an energy transmission path of the battery is realized, and a charging and discharging function of the core is realized. Additionally, since the tab of the core of the square battery is directly connected to the cover plate of the square battery, the auxiliary welding sheet and the connection sheet are removed, thereby greatly improving the internal space utilization rate and the mass specific energy of the square battery.

### DESCRIPTION OF THE DRAWINGS

FIG. 1 is a schematic diagram of a square battery according to some embodiments of the present disclosure.
FIG. 2 is a schematic diagram showing a relationship between a folded size of a negative electrode tab and a thickness of a core of the square battery according to some embodiments of the present disclosure.
FIG. 3 is a schematic flowchart of an embodiment of a welding method according to some embodiments of the present disclosure.
FIG. 4 is a schematic diagram showing a comparison of tensile forces of batteries having two laser welding shapes according to some embodiments of the present disclosure.
FIG. 5 is a schematic diagram showing a comparison of tested internal resistances of batteries having two laser welding shapes according to some embodiments of the present disclosure.
FIG. 6 is a schematic diagram showing a comparison of discharging temperature rise of batteries having two laser welding shapes according to some embodiments of the present disclosure.

### DETAILED DESCRIPTION

The inventors have researched and found that the welding connection method of the square battery in the related art not only increases the weight of the battery itself, occupies the internal space of the battery, reduces the mass specific energy of the battery and the internal space utilization rate of the square battery. Further, due to the introduction of the auxiliary welding sheet and the connection sheet, the energy inside the core needs to be output to the charging and discharging port on the cover plate only through the auxiliary welding sheet and the connection sheet. In the process of the welding connection method, a portion of the energy is lost, which causes a temperature inside the battery to rise significantly and a risk of thermal runaway during long-term use of the battery. The square battery has following problems: ① introduction of the auxiliary welding sheet and the connection sheet result in a high cost and large volume; ② the energy needs to be transmitted by the auxiliary welding sheet and the connection sheet, so that a portion of the energy is lost, which causes the temperature inside the battery to rise significantly and the risk of thermal runaway during long-term use of the battery.

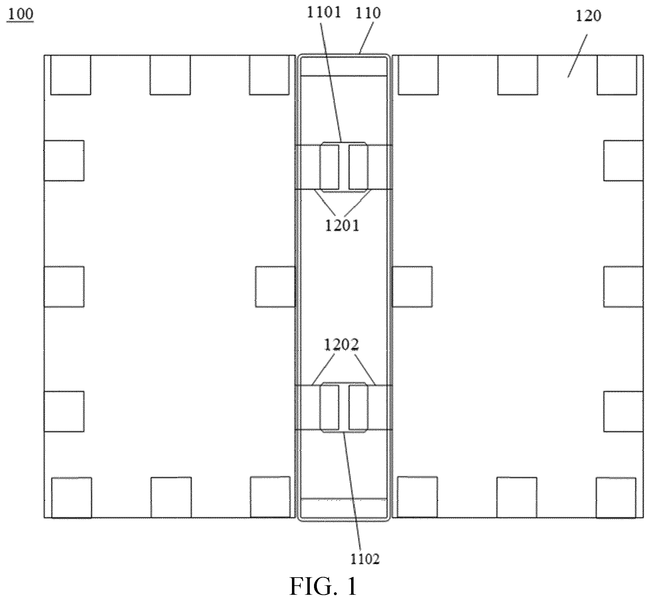

To solve the above problems, as shown in FIG. 1, some embodiments of the present disclosure may provide a square battery 100, including: a cover plate 110 provided with a pole; and a core 120 provided with a tab, where the tab may be connected directly to the pole by laser welding.

The square battery 100 provided in the embodiments includes the cover plate 110 provided with the pole; and the core 120 provided with the tab which is directly connected to the pole by laser welding. As such, the construction of the energy transmission path of the battery is realized, and the charging and discharging function of the core is realized. At the same time, compared with the ultrasonic welding, since the tab is connected to the pole by the laser welding, the firmness of welding the tab to the pole is improved. Further, the square battery removes the auxiliary welding sheet and the connection sheet, which improves the internal space utilization rate and the mass specific energy of the battery. In some embodiments of the present disclosure, the pole may include a positive pole and a negative pole, the tab may include a positive tab and a negative tab, the positive tab may be directly connected to the positive pole by laser welding, and/or, the negative tab may be directly connected to the negative pole by laser welding.

As shown in FIG. 1, the pole includes a positive pole 1101 and a negative pole 1102, the tab includes a positive tab 1201 and a negative tab 1202, the positive tab 1201 is directly connected to the positive pole 1101 by laser welding, and/or, the negative tab 1202 is directly connected to the negative pole 1102 by laser welding. That is, the positive tab 1201 may be connected to the positive pole 1101 by laser welding, and/or, the negative tab 1202 may be connected to the negative pole 1102 by laser welding. Since the positive tab 1201 is directly connected to the positive pole 1101, and/or the negative tab 1202 is directly connected to the negative pole 1102, the construction of the energy transmission path of the battery is realized, and the charging and discharging function of the core is realized. At the same time, compared to ultrasonic welding, since the positive tab 1201 is connected to the positive pole 1101 by laser welding, and/or the negative tab 1202 is connected to the negative pole 1102 by laser welding, the firmness of welding the tab to the pole is improved. Further, the square battery removes the auxiliary welding sheet and the connection sheet, thereby improving the internal space utilization rate and the mass specific energy of the square battery.

In some embodiments of the present disclosure, the positive tab has a multi-layer positive electrode tab, where the multi-layer positive electrode tab is folded and tightened, the negative tab has a multi-layer negative electrode tab, where the multi-layer negative electrode tab is folded and tightened, a ratio of a folded size of the multi-layer positive electrode tab to a thickness of the core is less than or equal to 1, and a ratio of a folded size of the multi-layer negative electrode tab to the thickness of the core is less than or equal to 1, where the folded size of either the multi-layer positive electrode tab or the multi-layer negative electrode tab refers to a clamp positioning size when the tab is folded.

In particular, the folded size H_{folded} of the tab may be 1/4-5/7 of the thickness H_{thickness of core} of the core. Alternatively, the folded size H_{folded} =H_{thickness of core}*1/4, which makes the first-layer tab more abundant. The tab after folded according to this formula do not break a solder printing edge due to the pulling of the tab during subsequent laser welding, thereby increasing the yield of the tab.

In some embodiments of the present disclosure, the core has a thickness of 1mm-700mm and the multi-layer positive electrode tab has a folded size of 1mm-500mm, and the multi-layer negative electrode tab has a folded size of 1mm-500mm.

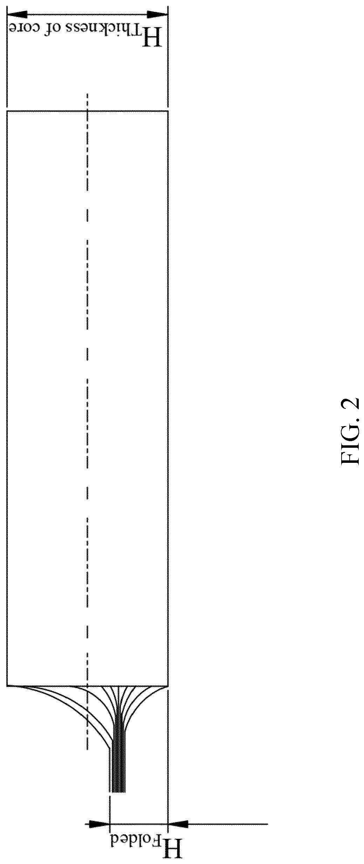

Specifically, H_{thickness of core} has a size range of 1mm-700mm and the folded size H_{folded} has a size range of 1mm-500mm. For example, when H_{thickness of core} is 1 mm, the folded size H_{folded} is 1 mm, and the first-layer tab is generally abundant. When H_{thickness of core} is 700mm, the folded size H_{folded} is 500 mm, and the first-layer tab is more abundant. As shown in FIG. 2, which is a schematic diagram showing a relationship between the folded size H_{folded} and the thickness H_{thickness of core} of the core. The folded size may be determined according to the thickness of the core, which fully considers the influence of the thickness of the core on the subsequent tab welding yield, so that the problem that the pulling of the tab causes the breakage of the subsequent solder printing edge is avoided. As can be seen from the thickness of the core, and the folded sizes of the positive and negative tabs that it is possible to avoid the problem of breaking the solder printing edge due to the pulling of the tabs by limiting the folding sizes of the positive and negative tabs, thereby making the tabs and the poles to be more reliably connected.

In some embodiments of the present disclosure, the positive tab may be formed by performing ultrasonic pre-welding for the multi-layer positive electrode tab; and/or, the negative tab may be formed by performing ultrasonic pre-welding for the multi-layer negative electrode tab.

Specifically, in one embodiment of the present disclosure, ultrasonic pre-welding is performed for the multi-layer positive electrode tab to form the positive tab. In another embodiment of the present disclosure, ultrasonic pre-welding is performed for the multi-layer negative electrode tab to form the negative tab. In yet another embodiment, ultrasonic pre-welding is performed for the multi-layer positive electrode tab to form the positive tab while ultrasonic pre-welding is performed for the multi-layer negative electrode tab to form the negative tab. Since a laser beam is sensitive to inter-slice spacing of a welding material, as the number of layers of the tab is increased, the larger the inter-slice spacing of the bottom layer of the tab is, the more difficult the laser beam is to penetrate the tab, and it is easy to cause virtual welding. The tighter the inter-slice spacing of the tab is, the better the fusion of the base material is, and it is not easy to cause the virtual welding. Therefore, the inter-slice spacing between the tabs can be reduced by the ultrasonic pre-welding, so that the tabs become a compact whole, and abnormalities such as the virtual welding that may occur during laser welding can be reduced.

In some embodiments of the present disclosure, the ultrasonic pre-welded positive tab is connected to the positive pole by laser final welding; and/or, the ultrasonic pre-welded negative tab is connected to the negative pole by laser final welding.

In one embodiment, the ultrasonic pre-welded positive tab is connected to the positive pole by laser final welding. In another embodiment, the ultrasonic pre-welded negative tab is connected to the negative pole by laser final welding. In yet another embodiment, the ultrasonic pre-welded positive tab is connected to the positive pole by laser final welding while the ultrasonic pre-welded negative tab is connected to the negative pole by laser final welding. In the present embodiments, the ultrasonic pre-welded positive tab is connected to the positive pole by laser welding, and/or the ultrasonic pre-welded negative tab is connected to the negative pole by laser welding, which may reduce the virtual welding that may occur during laser welding, and the final welding is the laser welding, so that the positive tab and the positive pole are more firmly connected with each other, and/or the negative tab and the negative pole are more firmly connected with each other.

In some embodiments, a ratio of an area for the laser final welding to an area for the ultrasonic pre-welding may be less than 1.

Specifically, the area for the laser final welding is less than the area for the ultrasonic pre-welding. Illustratively, the area for the laser final welding is 0.6-0.8 times the area for the ultrasonic pre-welding. Illustratively, the area for the ultrasonic pre-welding is greater than 2mm² and less than or equal to 600mm², and the area for the laser final welding is greater than or equal to 2mm² and less than or equal to 540mm². If the area for the ultrasonic pre-welding is 10mm², the area for the laser final welding may be set to 7mm², that is, it is only necessary to satisfy that the area for the laser final welding is less than the area for the ultrasonic pre-welding. By setting the ratio of the area for the laser finish welding to the area for the ultrasonic pre-welding, the tabs are firmly welded to the poles by the pre-welding and the final welding.

In some embodiments of the present disclosure, a shape for the laser final welding is at least one of an elliptical shape, a circular shape, or a polygon, and a shape for the ultrasonic pre-welding is at least one of the elliptical shape, the circular shape, or the polygon.

Specifically, the shape of the laser termination welding is at least one of a square, an elliptical shape, a circular shape, or a pentagonal shape. It should be noted that, since a single regular shape and an area of the laser termination welding are simpler and more convenient to design, it is preferable in this embodiment to select a regular shape for the laser termination welding, such as an elliptical shape, a square, or the like. For example, the polygon may be a square, a pentagonal shape, or the like.

Specifically, the shape of the ultrasonic pre-welding is at least one of an elliptical shape, a circular shape, or a polygonal shape. It should be noted that, because of a single regular shape, the area design of the ultrasonic pre-welding is simpler and more convenient, and therefore, as preferred in the present embodiment, the shape of the ultrasonic pre-welding is a regular shape, such as an elliptical shape, a square shape, or the like. For example, the polygon may be a square, a pentagonal shape, or the like.

In some embodiments of the present disclosure, a ratio of the area for the ultrasonic pre-welding to the area for the pole is greater than or equal to 0.32 and less than or equal to 0.81.

Specifically, overcurrent and temperature rise of the battery are closely related to the area for the laser final welding. When the area for the laser final welding is larger, the overcurrent capability of the battery is better, and the temperature rise of the battery is also better. However, when the area for the laser final welding is larger, the processing and manufacturability for the laser final welding is lower. Since the laser final welding is performed on the basis of ultrasonic pre-welding, the area for the laser final welding is less than the area for the ultrasonic pre-welding, and the area for the laser final welding needs to be set according to the area for the ultrasonic pre-welding. When the pole is square and the shape for the laser final welding is also square, the length of the square for the ultrasonic pre-welding is 0.8 times the length of the pole and the width of the square for the ultrasonic pre-welding is 0.4 times the width of the pole, to maximize the area for the ultrasonic pre-welding, so that it is ensured the area for the laser final welding which is positively related to the area for the ultrasonic pre-welding has an increased space, to enable the processing and manufacturability for the laser final welding to be higher and the overcurrent capability and the temperature rise to be controlled better. In this case, the ratio of the area for the ultrasonic pre-welding to the area for the pole is 0.32. When the pole has an elliptical shape and the shape for the laser final welding also has elliptical shape, the long half axis of the elliptical shape for the ultrasonic pre-welding is 0.9 times the long half axis of the elliptical shape for the pole, and the short half axis of the elliptical shape for the ultrasonic pre-welding is 0.9 times the short half axis of the elliptical shape for the pole, to maximize the area for the ultrasonic pre-welding, so that it is ensured that the area for the laser final welding which is positively related to the area for the ultrasonic pre-welding has an increased space, to enable the processing and manufacturability for the laser final welding to be higher and the overcurrent capability and temperature rise to be controlled better. In this case, the ratio of the area for the ultrasonic pre-welding to the area for the pole is 0.81. Illustratively, the shapes for the pole and the ultrasonic pre-welding both are the elliptical shapes, the short half axis of the elliptical shape for the pole is b, the long half axis of the elliptical shape for the pole is a, the area for the pole is S1=π*a*b, the short half axis of the elliptical shape for the ultrasonic pre-welding is 0.8b, the long half axis of the elliptical shape for the ultrasonic pre-welding is 0.4a, and the area for the ultrasonic pre-welding is S2=π*0.8a*0.4b, where a has a size range of 1mm-500mm, and b has a size range of 1mm-400mm.

In some embodiments of the present disclosure, the ratio of the circumference of the trajectory for the laser final welding to the circumference of the trajectory for the ultrasonic pre-welding is less than 1.

In order to ensure the reasonableness of setting the circumference of the trajectory for the laser final welding, the ratio of the circumference of the trajectory for the laser final welding to the circumference of the trajectory for the ultrasonic pre-welding is less than 1. That is, the circumference of the trajectory for the laser final welding is less than the circumference of the trajectory for the ultrasonic pre-welding, to make the processing and manufacturability for the laser final welding to be higher and the overcurrent capability and the temperature rise of the battery to be controlled better. Illustratively, the shapes for the laser final welding and the ultrasonic pre-welding both are the elliptical shapes, the short half-axis of the elliptical shape for the ultrasonic pre-welding is b, the long half-axis of the elliptical shape for the ultrasonic pre-welding is a, the short half-axis of the elliptical shape for the laser final welding is 0.32b, the long half-axis of the elliptical shape for the laser final welding is 0.72a, the circumference of the trajectory for the ultrasonic pre-welding is L1=2π*b+4(a-b), the circumference of the trajectory of the laser final welding is L2=2π*0.32b+4(0.72a-0.32b), the size range of a is more than 1 mm and less than or equal to 500 mm, and the size range of b is greater than or equal to 1 mm and less than or equal to 400mm.

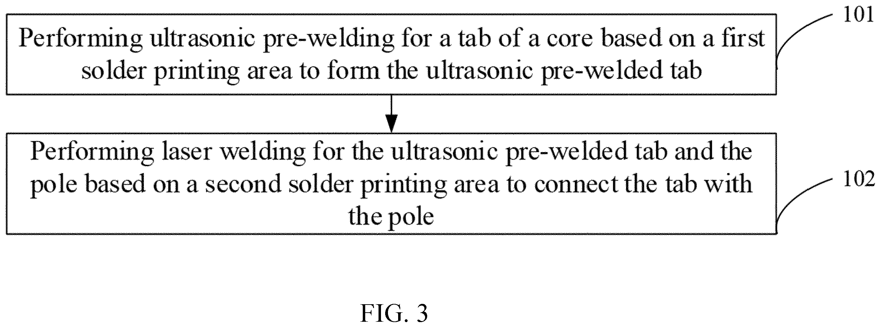

As shown in FIG. 3, which is a schematic flowchart of an embodiment of a welding method according to some embodiments of the present disclosure. The welding method may include steps 101-102.

At step 101, ultrasonic pre-welding for a tab of a core may be performed according to a first solder printing area to form the ultrasonic pre-welded tab, where the first solder printing area is determined according to a size and a shape of the pole.

The welding method is used for connection between a core and a cover plate in a battery. The battery includes the core and the cover plate, where the core is provided with a tab, the tab is a multilayer tab, and the cover plate includes a pole. The core may be connected to the cover plate in the battery in the embodiments.

The shape of the pole refers to the shape of the pole on the cover plate, and may be, for example, a square, a circular shape, or an elliptical shape and the like. The size of the pole refers to the size of the pole on the cover plate under different shapes, such as a radius, a length and a width. The first solder printing area refers to a parameter of a solder printing trajectory in which the ultrasonic pre-welding is performed for the tab. Since the setting of the first solder printing area may affect the overcurrent capability and the temperature rise of the battery, the first solder printing area may be determined by detecting the size and the shape of the pole in the present embodiment. By considering the influence of the shape and the size of the pole of the cover plate on the first solder printing area, the reasonableness of the first solder printing area is ensured, the accuracy of subsequent welding is ensured, and the poor welding is avoided.

It should be noted that, since a laser beam is sensitive to inter-slice spacing of a welding material, as the number of layers of the tab is increased, the larger the inter-slice spacing of the bottom layer of the tab is, the more difficult the laser beam is to penetrate the tab, and it is easy to cause virtual welding. The tighter the inter-slice spacing of the tab is, the better the fusion of the base material is, and it is not easy to cause the virtual welding. Therefore, the inter-slice spacing between the tabs can be reduced by the ultrasonic pre-welding, so that the tabs become a compact whole, and abnormalities such as the virtual welding that may occur during laser welding can be reduced.

Further, the shape of the pole may be one of a square, a circular shape, or an elliptical shape, and respective sizes of the pole may be a length of a and a width of b, a radius of r, a short half axis of c, and a long half axis of d.

Specifically, when the shape of the pole is the square, the respective sizes of the pole are the length of a and the width of b; when the shape of the pole is the circular shape, the respective sizes of the pole are the radius of r; and when the shape of the pole is the elliptical shape, the respective sizes of the pole are the short half axis of c and the long half axis of d.

Further, if the shape of the pole is the square, the length of a of the square is adjusted according to a first preset adjustment coefficient of *λ*1 to obtain an adjusted length, where 0<*λ*1<1; the width of b of the square is adjusted according to a second preset adjustment coefficient of A2 to obtain an adjusted width, where 0<A2<1; and the first solder printing area is determined based on the adjusted length and the adjusted width. Alternatively, 0.7<*λ*1<0.9. Alternatively, 0.3<*λ*2<0.5.

Specifically, when the shape of the pole is the square, the length of a and the width of b of the pole can be adjusted according to the first preset adjustment coefficient of *λ*1 and the second preset adjustment coefficient of *λ*2, respectively, to obtain the adjusted length of *λ*1*a and the adjusted width of *λ*2*b. The first solder printing area S_{ultrasonic}=(*λ*1*a)*(*λ*2*b) can be obtained by performing an area calculation formula of the square according to the adjusted length of *λ*1*a and the adjusted width of *λ*2*b. Since 0.7<*λ*1<0.9 and 0.3<*λ*2<0.5, the first solder printing area is less than the area of the pole, and it is ensured that the adjusted length and the adjusted width are maximized under reasonable circumstances, so that the reasonableness and the maximization of the first solder printing area are ensured, the redundancy of welding the tab of the core in the battery is reduced, and the safety of the core is ensured.

In a specific embodiment of the present disclosure, if *λ*1=0.8 and *λ*2=0.4, then S_{ultrasonic}=(0.8*a)*(0.4*b)=0.32ab. It should be understood that the length of a and the width of b of the square pole may be adjusted in the present embodiment, and for the square pole, the length of a is adjusted to be 0.8 times the original value of the length of a and the width of b is adjusted to be 0.4 times the original value of the width of b. Compared with the conventional manual experience setting, the reasonable accuracy of calculating the first solder printing area is improved, and the accuracy of the ultrasonic pre-welding is improved.

Further, if the shape of the pole is the circular shape, the radius of r of the pole can be adjusted according to the third preset adjustment coefficient *λ*3 to obtain an adjusted radius, where 0< *λ*3<1; and the first solder printing area is determined according to the adjusted radius. Alternatively, 0.75< *λ*3<0.9

Specifically, when the shape of the pole is the circular shape, the radius of r of the pole can be adjusted according to the third preset adjustment coefficient A3 to obtain an adjusted radius *λ*3*r. The first solder printing area S_{ultrasonic}= *π**(*λ*3*r)*(*λ*3*r) can be obtained by performing an area calculation formula of the circular shape according to the adjusted radius *λ*3*r. Since 0.75< A3<0.9, the first solder printing area is less than the area of the pole, and it is ensured that the adjusted radius is maximized under reasonable circumstances, so that the reasonableness and the maximization of the first solder printing area are ensured, the redundancy of welding the tab of the core in the battery is reduced, and the safety of the core is ensured.

In a specific embodiment of the present disclosure, if A3=0.8, then S_{ultrasonic}= *π**(0.8*r)*(0.8*r)=0.64*π**r². It should be understood that the radius of r of the circular pole may be adjusted in the present embodiment, and for the circular pole, the radius of r is adjusted to 0.8 times the original value of the radius. Compared with the conventional manual experience setting, the reasonable accuracy of calculating the first solder printing area is improved, and the accuracy of the ultrasonic pre-welding is improved.

Further, if the shape of the pole is the elliptical shape, the short half axis of c of the elliptical pole can be adjusted according to a fourth preset adjustment coefficient A4 to obtain an adjusted short half axis, where 0<*λ*4<1; the long half axis of d of the elliptical pole can be adjusted according to a fifth preset adjustment coefficient *λ*5 to obtain an adjusted long half axis, wherein 0<*λ*5<1; and the first solder printing area is determined according to the adjusted half axis and the adjusted half axis. Alternatively, 0.85<*λ*4<0.95. Alternatively, 0.85<*λ*5<0.95.

Specifically, when the shape of the pole is the elliptical shape, the short half-axis of c and the long half-axis of d of the pole can be adjusted according to the fourth preset adjustment coefficient of *λ*4 and the fifth preset adjustment coefficient of *λ*5, respectively, to obtain the adjusted short half-axis *λ*4*c and the adjusted long half-axis *λ*5*d. The first solder printing area S_{ultrasonic}=*π**(*λ*4*c)*(*λ*5*d) can be obtained by performing an area calculation formula of the elliptical shape according to the adjusted short half-axis *λ*4*c and the adjusted long half-axis *λ*5*d. Since 0.85<*λ*4<0.95 and 0.85<*λ*5<0.95, the first solder printing area is less than the area of the pole, and it is ensured that the adjusted short half-axis and the adjusted long half-axis are maximized under reasonable circumstances, so that the reasonableness and the maximization of the first solder printing area are ensured, the redundancy of welding the tab of the core in the battery is reduced, and the safety of the core is ensured.

In a specific embodiment of the present disclosure, if *λ*4=0.9 and *λ*5=0.9, then S_{ultrasonic}=*π**(*λ*4*c)*(*λ*5*d)=0.81**π**c*d. It should be understood that the short half axis of c and the long half axis of d of the elliptical pole may be adjusted in the present embodiment, and for the elliptical pole, the short half axis of c is adjusted to 0.9 times the original value of the short half axis and the long half axis of d is adjusted to 0.9 times the original value of the long half axis. Compared with the conventional manual experience setting, the reasonable accuracy of calculating the first solder printing area is improved, and the accuracy of the ultrasonic pre-welding is improved.

At step 102, laser welding for the ultrasonic pre-welded tab and the pole may be performed according to a second solder printing area to connect the tab with the pole, where a ratio of the second solder printing area to the first solder printing area is less than 1.

The second solder printing area refers to a parameter of a solder printing trajectory in which laser final welding is performed for the ultrasonic pre-welded tab and the pole. Since it is difficult to ensure the stability of the welding by the ultrasonic pre-welding only and a virtual welding or poor solder printing may exist, the laser final welding is further performed for the ultrasonic pre-welded tab and the pole on the basis of the ultrasonic pre-welding in the present embodiment, so that a complete path is formed between the tab and the pole to realize overcurrent charging and discharging.

Specifically, the ratio of the second solder printing area to the first solder printing area is less than 1, that is, the second solder printing area is less than the first solder printing area. By considering the influence of the first solder printing area on the area for the laser welding, the reasonableness of the second solder printing area is ensured, the accuracy of the laser welding is ensured, and the poor welding is avoided.

Further, the ratio of the second solder printing area to the first solder printing area is *µ*, and 0.6<*µ*<0.8.

Specifically, the more sparse the connection between the tab and the cover plate is, the more passages through which the energy is transferred from the inside of the battery can be increased, so that the energy transmission capability can be improved and the overcurrent capability can be effectively improved. At the same time, the temperature rise of the battery can be effectively reduced because the number of the passages is increased and the energy is no longer concentrated. A reasonable laser solder printing area needs to be provided, because the overcurrent and the temperature rise of the battery are closely related to the second solder printing area. When the second solder printing area is larger, the overcurrent capability is better and the temperature rise of the battery is better. However, when the second solder printing area is larger, the processing and the manufacturability for the laser welding are lower. When the second solder printing area is 0.6∼0.8 times the area for the ultrasonic pre-welding, the processing and the manufacturability for the laser welding are higher, and the overcurrent capability and the temperature rise are better controlled. Therefore, in the embodiment, the second solder printing area is adjusted to be 0.6-0.8 times the first solder printing area. As an alternative embodiment, the laser solder printing area Sₗₐₛₑᵣ=0.8_{Sultrasonic} to maximize the second solder printing area and improve the reasonableness and accuracy of the second solder printing area.

Further, the performing of the laser welding for the ultrasonic pre-welded tab and the pole according to the second solder printing area may include: obtaining a preset welding shape for the laser welding; determining a laser welding trajectory based on the second solder printing area and the preset welding shape; and performing laser welding for the ultrasonic pre-welded tab and the pole according to the laser welding trajectory.

The preset welding shape for the laser welding may be a preset shape for performing laser welding. For example, the preset welding shape is a pentagonal star, a triangle, a polygon, or an irregular shape.

Specifically, the preset welding shape is a pentagonal star, a triangle, a polygon, or an irregular shape. It should be noted that the second solder printing area is more easily and conveniently designed for a regular welding shape. Therefore, as an alternative embodiment, the preset welding shape is a regular shape, such as an elliptical shape, a square, or the like.

Specifically, laser welding based on the preset welding shape and the second solder printing area is performed for the ultrasonic pre-welded tab and the pole, to complete laser welding for the ultrasonic pre-welded tab and the pole. More specifically, a dimension in the pre-set welding shape may be calculated according to the second solder printing area and the preset welding shape, a laser welding trajectory may be calculated according to the dimension and the preset welding shape, and laser welding is performed for the ultrasonic pre-welded tab and the pole according to the laser welding trajectory, thereby realizing welding of the tab and the pole in the battery. Since the second solder printing area is reasonable and accurate, the yield of the battery is improved.

Further, before performing ultrasonic pre-welding for the tab of the core according to the first solder printing area, the welding method may further include: determining a folded size of the tab according to a thickness of the core; and folding and tightening the tab according to the folded size.

The folded size is a clamp positioning size when the tab is folded.

Specifically, the tab has been slit and die-cutted to perform assembling of the core, where the assembling may include but not limited to lamination or winding. Then, the thickness H_{thickness of core} of the core may be obtained according to the type or the parameter information of the core, and the folded sizes of the positive tab and the negative tab in the core may be determined according to the thickness of the core, so as to ensure that the tab of the assembled core are sufficiently dense during ultrasonic pre-welding. It should be understood in the present embodiment that the folded size may be determined according to the thickness of the core, which fully considers the influence of the thickness of the core on the subsequent tab welding yield, so that the problem that the pulling of the tab causes the breakage of the subsequent solder printing edge is avoided.

Further, the core has a thickness of 1mm-700mm and the folded size is 1mm-500mm.

Alternatively, the folded size is less than or equal to the thickness of the core. Alternatively, the ratio of the folded size to the thickness of the core is in a range of 1/5 to 1. Alternatively, the ratio of the folded size to the thickness of the core is in a range of 1/4 to 5/7.

In particular, the folded size H_{folded} of the tab may be 1/4-5/7 of the thickness H_{thickness of core} of the core. Alternatively, the folded size H_{folded} =H_{thickness of core}*1/4, which makes the first-layer tab more abundant. The lug after folded according to this formula do not break a solder printing edge due to the pulling of the tab during subsequent laser welding, thereby increasing the yield of the tab. As shown in FIG. 2, which is a schematic diagram showing a relationship between the folded size H_{folded} and the thickness H_{thickness of core} of the core.

In one embodiment of the present disclosure, H_{thickness of core} has a size range of 1mm-700mm and the folded size H_{folded} has a size range of 1mm-500mm. For example, when H_{thickness of core} is 1 mm, the folded size H_{folded} is 1 mm, and the first-layer tab is generally abundant. When H_{thickness of core} is 700mm, the folded size H_{folded} is 500 mm, and the first-layer tab is more abundant.

Further, the ratio of the first solder printing area to the area for the pole is greater than or equal to 0.32 and less than or equal to 0.81; and/or the ratio of the circumference of the trajectory corresponding to the laser welding to the circumference of the trajectory corresponding to the ultrasonic pre-welding is less than 1.

Specifically, overcurrent and temperature rise of the battery are closely related to the area for the laser final welding. When the area for the laser final welding is larger, the overcurrent capability of the battery is better, and the temperature rise of the battery is also better. However, when the area for the laser final welding is larger, the processing and manufacturability for the laser final welding is lower. Since the laser final welding is performed on the basis of ultrasonic pre-welding, the area for the laser final welding is less than the area for the ultrasonic pre-welding, that is, the second solder printing area is less than the first solder printing area, and the area for the laser final welding needs to be set according to the area for the ultrasonic pre-welding. When the pole is square and the shape for the laser final welding is also square, the length of the square for the ultrasonic pre-welding is 0.8 times the length of the pole and the width of the square for the ultrasonic pre-welding is 0.4 times the width of the pole, to maximize the area for the ultrasonic pre-welding, so that it is ensured the area for the laser final welding which is positively related to the area for the ultrasonic pre-welding has an increased space, to enable the processing and manufacturability for the laser final welding to be higher and the overcurrent capability and the temperature rise to be controlled better. In this case, the ratio of the area for the ultrasonic pre-welding to the area for the pole is 0.32. When the pole has an elliptical shape and the shape for the laser final welding also has elliptical shape, the long half axis of the elliptical shape for the ultrasonic pre-welding is 0.9 times the long half axis of the elliptical shape for the pole, and the short half axis of the elliptical shape for the ultrasonic pre-welding is 0.9 times the short half axis of the elliptical shape for the pole, to maximize the area for the ultrasonic pre-welding, so that it is ensured that the area for the laser final welding which is positively related to the area for the ultrasonic pre-welding has an increased space, to enable the processing and manufacturability for the laser final welding to be higher and the overcurrent capability and temperature rise to be controlled better. In this case, the ratio of the area for the ultrasonic pre-welding to the area for the pole is 0.81. Illustratively, the shapes for the pole and the ultrasonic pre-welding both are the elliptical shapes, the short half axis of the elliptical shape for the pole is b, the long half axis of the elliptical shape for the pole is a, the area for the pole is S1=π*a*b, the short half axis of the elliptical shape for the ultrasonic pre-welding is 0.8b, the long half axis of the elliptical shape for the ultrasonic pre-welding is 0.4a, and the area for the ultrasonic pre-welding is S2=π*0.8a*0.4b, where a has a size range of 1mm-500mm, and b has a size range of 1mm-400mm.

In particular, in order to ensure the reasonableness of setting the circumference of the trajectory for the laser final welding, the ratio of the circumference of the trajectory for the laser final welding to the circumference of the trajectory for the ultrasonic pre-welding is less than 1. That is, the circumference of the trajectory for the laser final welding is less than the circumference of the trajectory for the ultrasonic pre-welding, to make the processing and manufacturability for the laser final welding to be higher and the overcurrent capability and the temperature rise of the battery to be controlled better. Illustratively, the shapes for the laser final welding and the ultrasonic pre-welding both are the elliptical shapes, the short half-axis of the elliptical shape for the ultrasonic pre-welding is b, the long half-axis of the elliptical shape for the ultrasonic pre-welding is a, the short half-axis of the elliptical shape for the laser final welding is 0.32b, the long half-axis of the elliptical shape for the laser final welding is 0.72a, the circumference of the trajectory for the ultrasonic pre-welding is L1=2π*b+4(a-b), the circumference of the trajectory of the laser final welding is L2=2π*0.32b+4(0.72a-0.32b), the size range of a is more than 1 mm and less than or equal to 500 mm, and the size range of b is greater than or equal to 1 mm and less than or equal to 400mm.

In the present embodiments, the first solder printing area may be determined according to the size and the shape of the pole to ensure the reasonableness of the first solder printing area. Ultrasonic welding may be performed for the tab on the core according to the first solder printing area, to reduce the inter-slice spacing between the tabs, so that the tab becomes a compact whole, and abnormalities such as the virtual welding that may occur during laser welding can be reduced. Since the second solder printing area is less than the first solder printing area when laser welding is performed for the ultrasonic pre-welded tab and the pole according to the second solder printing area, it can be ensured that the tab is completely attached to the pole. The overcurrent capability of the tab is ensured on the premise of achieving welding stability, and the reasonableness and maximization of the second solder printing area are ensured, thereby effectively improving the overcurrent capability at the connection between the tab and the pole and reducing the temperature rise. A complete path may be formed between the tab and the pole by the laser welding, thereby greatly improving the yield of the battery.

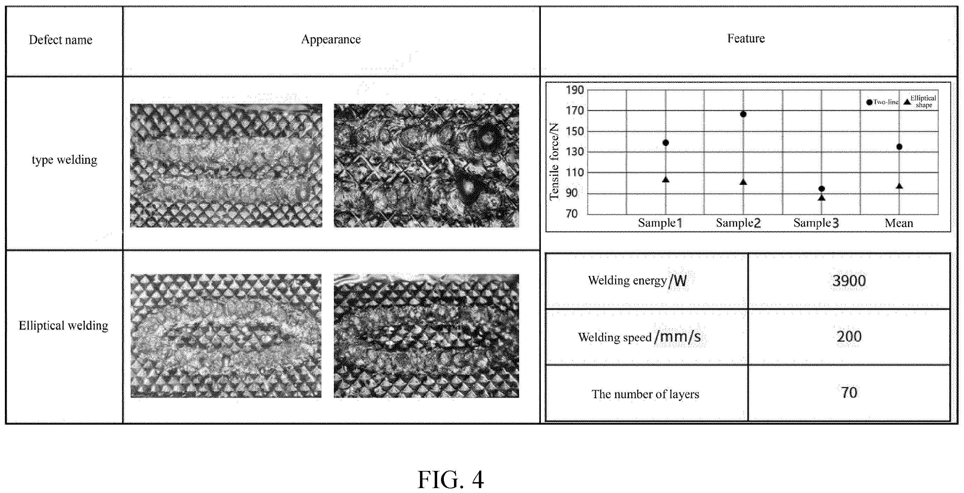

In one example, as shown in FIG. 4, which is a schematic diagram showing a comparison of tensile forces of batteries having two laser welding shapes, where an experimental group has the elliptical shape in the present example, and a comparative group has a two-line type, that is, a type of II, a welding energy of 3900W, a welding speed of 200mm/s, and a number of layers of 70. As can be evident from FIG. 4, the peel force appearance of the experimental group is higher than that of the comparative group, and a welding seam of the experimental group was superior to that of the comparative group.

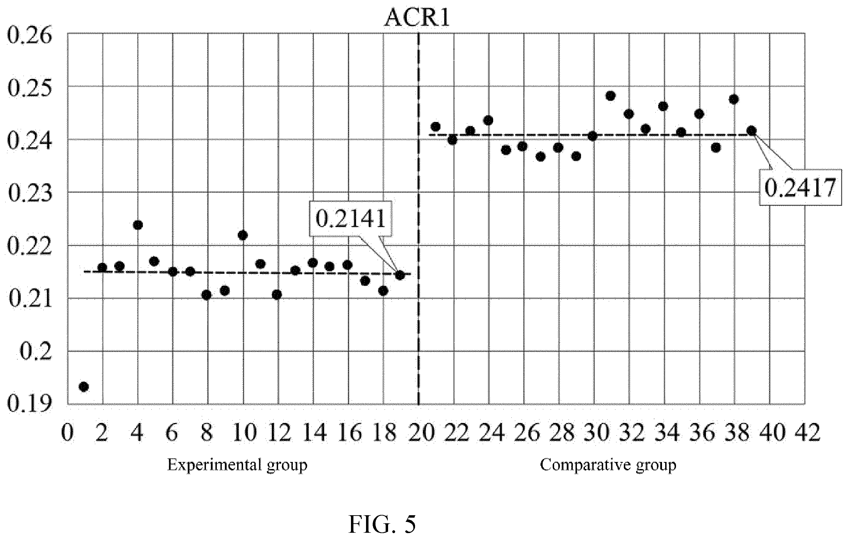

In one example, as shown in FIG. 5, which is a schematic diagram showing a comparison of tested internal resistances (ACR1) of batteries having two laser welding shapes, where an experimental group has the elliptical shape in the present example, and a comparative group has a two-line type. As can be seen from FIG. 5, the ACR1 of the experimental group is reduced by 0.0276 milliohms, i.e., reduced by 11.42%, compared to the comparative group.

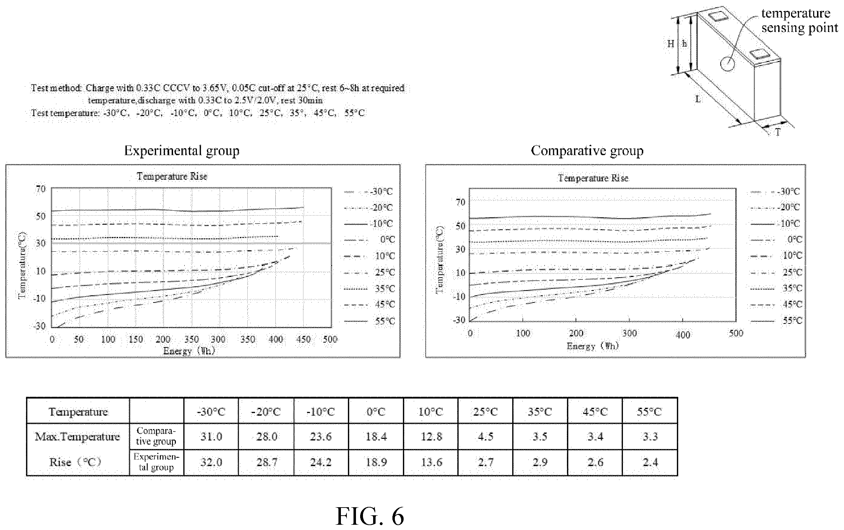

In one example, as shown in FIG. 6, which is a schematic diagram showing a comparison of discharging temperature rise of batteries having two laser welding shapes, where an experimental group has the elliptical shape in the present example, and a comparative group has a two-line type, that is, a type of II, a welding energy of 3900W, a welding speed of 200mm/s, and a number of layers of 70. As can be seen from FIG. 6, the discharging temperature rise of the experimental group is 1°C-1.5°C superior to that of the comparative group.

## Claims

1. A square battery, comprising:
a cover plate provided with a pole; and
a core provided with a tab, wherein the tab is connected directly to the pole by laser welding.

2. The square battery of claim 1, wherein
the pole comprises a positive pole and a negative pole;
the tab comprises a positive tab and a negative tab;
the positive tab is directly connected to the positive pole by laser welding; and/or
the negative tab is directly connected to the negative pole by laser welding.

3. The square battery of claim 2, wherein
the positive tab has a multi-layer positive electrode tab being folded and tightened; the negative tab has a multi-layer negative electrode tab being folded and tightened;
a ratio of a folded size of the multi-layer positive electrode tab to a thickness of the core is less than or equal to 1, and a ratio of a folded size of the multi-layer negative electrode tab to the thickness of the core is less than or equal to 1; and
wherein the folded size of either the multi-layer positive electrode tab or the multi-layer negative electrode tab refers to a clamp positioning size when the tab is folded.

4. The square battery of claim 3, wherein the core has a thickness of 1mm-700mm, the multi-layer positive electrode tab has a folded size of 1mm-500mm, and the multi-layer negative electrode tab has a folded size of 1mm-500mm.

5. The square battery of claim 4, wherein the folded size is 1/4-5/7 of the thickness of the core.

6. The square battery of claim 3, wherein the positive tab is formed by performing ultrasonic pre-welding for the multi-layer positive electrode tab; and/or, the negative tab is formed by performing ultrasonic pre-welding for the multi-layer negative electrode tab.

7. The square battery of claim 6, wherein the ultrasonic pre-welded positive tab is connected to the positive pole by laser final welding; and/or, the ultrasonic pre-welded negative tab is connected to the negative pole by laser final welding.

8. The square battery of claim 7, wherein a ratio of an area for the laser final welding to an area for the ultrasonic pre-welding is less than 1; and/or
a ratio of the area for the ultrasonic pre-welding to the area for the pole is greater than or equal to 0.32 and less than or equal to 0.81; and/or
a ratio of a circumference of a trajectory for the laser final welding to a circumference of a trajectory for the ultrasonic pre-welding is less than 1.

9. A welding method, comprising:
performing ultrasonic pre-welding for a tab of a core based on a first solder printing area to form the ultrasonic pre-welded tab, wherein the first solder printing area is determined based on a size and a shape of a pole; and
performing laser welding for the ultrasonic pre-welded tab and the pole based on a second solder printing area to connect the tab with the pole, wherein a ratio of the second solder printing area to the first solder printing area is less than 1.

10. The welding method of claim 9, wherein a shape of the pole is one of a square, a circular shape, or an elliptical shape, and respective sizes of the pole having the shape are respective one or more of a length of a and a width of b, a radius of r, a short half axis of c, and a long half axis of d.

11. The welding method of claim 10, further comprising:
in response to the shape of the pole being the square, adjusting the length of a based on a first preset adjustment coefficient of *λ*1 to obtain the adjusted length, wherein 0< *λ*1<1, adjusting the width of b based on a second preset adjustment coefficient of *λ*2 to obtain the adjusted width, wherein 0<*λ*2<1, and determining the first solder printing area based on the adjusted length and the adjusted width;
in response to the shape of the pole being the circular shape, adjusting the radius of r based on a third preset adjustment coefficient of *λ*3 to obtain the adjusted radius, wherein 0<*λ*3<1, and determining the first solder printing area based on the adjusted radius; and
in response to the shape of the pole is the elliptical shape, adjusting the short half axis of c based on a fourth preset adjustment coefficient of *λ*4 to obtain the adjusted short half axis, wherein 0<*λ*4<1, adjusting the long half axis of d based on a fifth preset adjustment coefficient of *λ*5 to obtain the adjusted long half axis, wherein 0<*λ*5<1, and determining the first solder printing area based on the adjusted short half axis and the adjusted long half axis;
preferably, 0.7<*λ*1<0.9;
preferably, 0.3<*λ*2<0.5;
preferably, 0.75<*λ*3<0.9;
preferably, 0.85<*λ*4<0.95; and
preferably, 0.85<*λ*5<0.95.

12. The welding method of any one of claims 9-11, wherein a ratio of the second solder printing area to the first solder printing area is *µ*, and 0.6<*µ*<0.8.

13. The welding method of any one of claims 9-11, further comprising: before the performing of the ultrasonic pre-welding,
determining a folded size of the tab based on a thickness of the core; and
folding and tightening the tab based on the folding size;
wherein the core has a thickness of 1mm-700mm and the folded size is 1mm-500mm; or,
the folded size is less than or equal to the thickness of the core; preferably, a ratio of the folded size to the thickness of the core is in a range of 1/5 to 1; and
preferably, a ratio of the folded size to the thickness of the core is in a range of 1/4 to 5/7.

14. The welding method of any one of claims 9-11, wherein the performing of the laser welding for the ultrasonic pre-welded tab and the pole based on the second solder printing area comprises:
obtaining a preset welding shape for the laser welding;
determining a traj ectory for the laser welding based on the second solder printing area and the preset welding shape; and
performing laser welding for the ultrasonic pre-welded tab and the pole based on the trajectory.

15. The welding method of any one of claims 9-11, wherein a ratio of the first solder printing area to the area for the pole is greater than or equal to 0.32 and less than or equal to 0.81; and/or
a ratio of a circumference of a trajectory corresponding to the laser welding to a circumference of a trajectory corresponding to the ultrasonic pre-welding is less than 1.
